# EUROPÄISCHE PATENTSCHRIFT

(11) **EP 1 331 123 B1**
(45) Veröffentlichungstag und Bekanntmachung des Hinweises auf die Patenterteilung: **27.08.2003**
(21) Anmeldenummer: 02002183.8
(22) Anmeldetag: 29.01.2002
(51) Int. Cl.: B60J 7/14

(54) **Kraftfahrzeug mit versenkbarem Hardtop**
Retractable hardtop vehicle roof
Toit rigide rétractable pour véhicule automobile

(43) Veröffentlichungstag der Anmeldung: 30.07.2003
(73) Patentinhaber: Dura Convertible Systems GmbH, 50735 Köln (DE)
(72) Erfinder: Mac Farland, David, Dipl.-Ing, 85716 Unterschleissheim (DE)
(74) Vertreter: Strobel, Wolfgang, Dipl.-Ing.

(56) Entgegenhaltungen:
- EP-A- 1 092 579
- EP-A- 1 092 580
- DE-U- 29 913 486

## Beschreibung

Die vorliegende Erfindung betrifft ein versenkbares Hardtop, insbesondere für viersitzige Cabriolets.

Da Cabriolets vermehrt als Ganzjahreswagen verwendet werden, besitzen Hardtops gegenüber herkömmlichen Kraftfahrzeugverdecken, die aus mit Stoff bespannten Gelenkstreben bestehen, deutliche Vorteile hinsichtlich Robustheit, Widerstand gegenüber Schneebelastung, Windanfälligkeit sowie Geräuschbelastung im Inneren des Fahrzeugs. Derartige Hardtops wurden früher zumeist abgenommen und an separater Stelle aufbewahrt, sind allerdings inzwischen auch als versenkbare Hardtops erhältlich, die ebenso wie ein flexibles Verdeck nach hinten geklappt werden und in einem im Kofferraum integrierten Verdeckkasten mittels Motoren versenkt und wieder ausgefahren werden können.

Aus der EP 1 092 579 A1, die den nächstkommenden Stand der Technik bildet, ist beispielsweise ein versenkbares Hardtop bekannt, welches aus drei Dachabschnitten bzw. Schalen besteht, wobei beim Verschwenken des Verdecks von einer ausgeklappten Dachstellung in eine versenkte öffnungsstellung sich der zweite, mittlere Dachabschnitt in den hinteren Dachabschnitt hineinbewegt und gleichzeitig sich der erste, vordere Dachabschnitt zunächst über den zweiten, mittleren und entlang von diesem Dachabschnitt und anschließend zwischen diesen und den hinteren Dachabschnitt bewegt. Im eingeklappten Zustand kommen also die drei Dachabschnitte mit der Außenseite nach unten zu liegen, wobei der erste Dachabschnitt sich zwischen dem zweiten und dritten Dachabschnitt befindet. Gleichzeitig ist im dritten Dachabschnitt eine bewegliche Heckscheibe angeordnet, die auch als eigenständiger vierter Dachabschnitt betrachtet werden kann und die sich ebenfalls in eingeklapptem Zustand des Verdecks in der verschachtelten Endposition einfügt. Das Hardtop weist eine flexible Außenschicht, insbesondere aus textilem Gewebe, auf, die mit dem ersten und dem dritten Abschnitt flächig verbunden ist, um eine Abdichtung in den Übergangsbereichen zwischen erstem und zweitem sowie zweitem und drittem Abschnitt zu schaffen.

Dieses dreiteilige Hardtop mit einziehbarer Heckscheibe bietet im Vergleich zu den zuvor bekannten zweiteiligen Hardtops bereits eine deutliche Verbesserung des Komforts und der Größe der Fahrgastzelle, ist jedoch nur begrenzt zur Ausstattung einer Limousine geeignet. Nachteilig ist außerdem insbesondere das Abnehmen der Funktionsfähigkeit der Dichtung zwischen drittem Abschnitt und viertem Abschnitt (Heckscheibe) bei häufiger. Betätigung des Schwenkmechanismus.

Der vorliegenden Erfindung liegt deshalb die Aufgabe zugrunde, ein versenkbares Hardtop zu schaffen, welches auch für große Fahrzeuge, insbesondere viersitzige Cabriolets, geeignet ist und ein großes Platzangebot im Inneren der Fahrgastzelle schafft, dennoch einen reibungslosen Versenkvorgang ermöglicht, im versenkten Zustand relativ wenig Platz einnimmt und gleichzeitig eine auch langfristig sichere Abdichtung der Fahrgastzelle liefert.

Diese Aufgabe wird durch die Merkmale des Anspruchs 1 gelöst.

Das erfindungsgemäße versenkbare Hardtop weist einen ersten, vorderen Abschnitt auf, der in Verbindung mit dem oberen Randbereich der Windschutzscheibe bringbar ist, einen in geschlossener Stellung des Hardtops an den ersten Abschnitt anschließenden zweiten Abschnitt, einen an den zweiten Abschnitt anschließenden dritten Abschnitt und einen an den dritten Abschnitt anschließenden vierten, hinteren Abschnitt, wobei jeder Abschnitt jeweils einen vorderen, ersten Randbereich und einen hinteren, zweiten Randbereich aufweist. Der erste und der zweite Abschnitt bilden in geschlossener Stellung des Hardtops im wesentlichen den Dachhimmel, der dritte Abschnitt im wesentlichen die C-Säule und der vierte Abschnitt schließt den oberen Bereich der Fahrgastzelle nach hinten ab. Die Abschnitte bzw. Schalen sind in einen Aufnahmeraum bzw. Verdeckkasten im Dachfahrzeug hinein und aus ihm heraus schwenkbar angeordnet, wobei jeder der Abschnitte derart angelenkt ist, daß er beim öffnungsvorgang nach hinten unten schwenkbar ist, so daß in geöffneter Stellung des Hardtops alle vier Abschnitte ineinandergeschachtelt mit ihrem jeweiligen ersten Randbereich in Fahrzeuglängsrichtung hinter dem zweiten Randbereich zu liegen kommen. Das erfindungsgemäße Hardtop ist dadurch gekennzeichnet, dass es eine flexible Außenschicht, insbesondere aus textilem Gewebe, aufweist, die nicht nur mit dem ersten und dritten Abschnitt, sondern auch mit Bereichen des vierten Abschnitts flächig verbunden ist. Dadurch ist es möglich, die Fahrgastzelle deutlich größer als bisher zu gestalten, und gleichzeitig ist zwischen drittem und viertem Abschnitt durch die Außenschicht eine dauerhaft sichere Abdichtung gewährleistet, womit auch ein ästhetisch ansprechender Gesamteindruck geschaffen wird.

Vorteilhaft im Sinne der Zuverlässigkeit des Versenkungsvorgangs ist hierbei, daß der erste, zweite und dritte Abschnitt über mehrere jeweils symmetrisch an beiden Außenbereichen des Hardtops angeordnete und schwenkbar verbundene Gelenkstreben verbunden sind.

Besonders vorteilhaft sind der erste, zweite und dritte Abschnitt über im Bereich der Dachmitte zwischen den Außenbereichen des Hardtops angeordnete und schwenkbar verbundene Gelenkstreben verbunden, durch die eine größere Robustheit des Hardtops gegenüber Schneebelastung, eine größere Stabilität in der mechanischen Führung und zudem-aufgrund der nun möglichen Anordnung dieser Mittelstreben in einer größeren Höhe - eine bessere Hebelwirkung erzielt wird.

Vorteilhafterweise sind im zweiten Abschnitt in den Außenbereichen sowie im Bereich der Dachmitte Längsschlitze angeordnet, die zum Durchtritt von Gelenkstreben während des Öffnungsvorgangs des Hardtops dienen, wodurch ermöglicht wird, daß sich der erste Abschnitt problemlos über den zweiten Abschnitt bewegen kann.

Im zweiten Randbereich des ersten Abschnitts sind in den Außenbereichen sowie im Bereich der Dachmitte ebenso wie im ersten Randbereich des dritten Abschnitts in den Außenbereichen Längsschlitze angeordnet, die zum Durchtritt von Gelenkstreben während des Öffnungsvorgangs des Hardtops dienen, wodurch die Kompaktheit des Hardtops in versenkter Stellung noch erhöht wird.

Vorteilhafterweise wird beim öffnungsvorgang des Hardtops der erste, vordere Abschnitt zunächst über den zweiten Abschnitt und anschließend zwischen diesen und den dritten Abschnitt bewegt, wodurch die Gesamthöhe des Hardtops während des Öffnungsvorgangs reduziert wird.

Besonders positive Auswirkungen in Form des geringen vom versenkten Hardtop benötigten Platzbedarfs hat, daß der vierte Abschnitt während des Öffnungsvorgangs des Hardtops in den dritten Abschnitt hineinbewegbar ist.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Fig. 1: eine schematische Seitenansicht eines erfindungsgemäßen versenkbaren Hardtops in geschlossener Stellung, eingebaut in ein Cabriolet;
- Fig. 2a, 2b: eine schematische Seitenansicht des versenkbaren Hardtops aus Fig. 1 in geschlossener Stellung ohne weitere Karosserieteile, wobei in Fig. 2b aus Gründen der Übersichtlichkeit die ersten drei Abschnitte des Hardtops nicht mehr eingezeichnet sind;
- Fig. 3 bis 8: schematisch den Ablauf des Öffnungsvorgangs des Hardtops aus Fig. 2a von leicht geöffneter Stellung bis hin zu nahezu vollständig versenkter Stellung;
- Fig. 9: eine schematische Seitenansicht des vollständig versenkten Hardtops bei geöffnetem Deckel des Verdeckkastens;
- Fig. 10: eine vergrößerte schematische Seitenansicht des vollständig versenkten Hardtops bei geschlossenem Deckel des Verdeckkastens; und
- Fig. 11: eine Draufsicht auf ein erfindungsgemäßes versenkbares Hardtop (ohne Verdeckbezug).

In den Zeichnungen sind gleiche Elemente mit gleichen Bezugsziffern versehen.

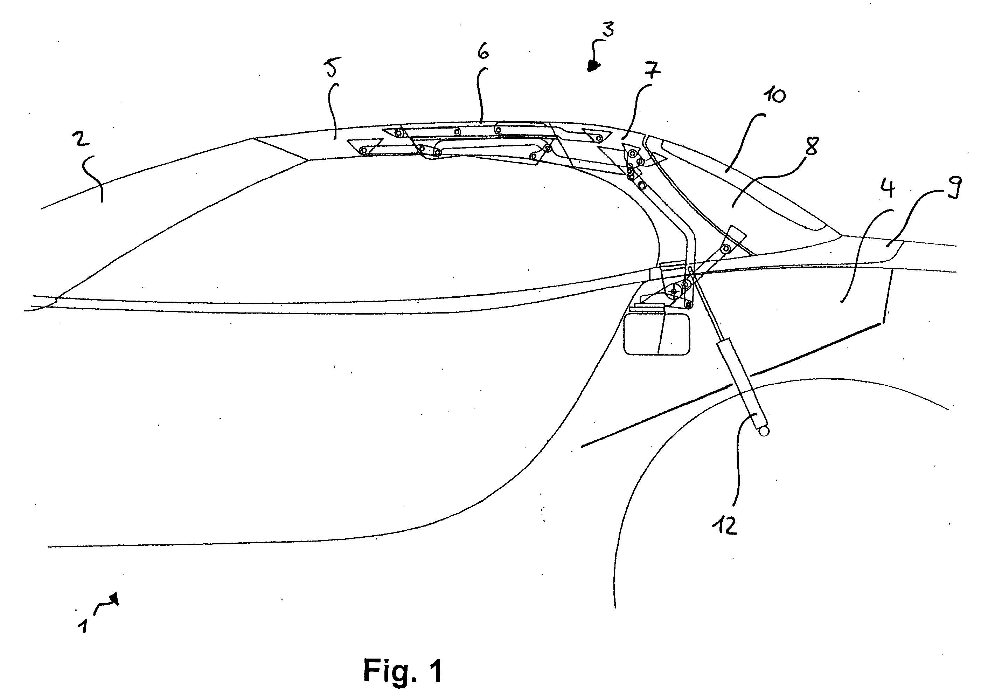

In Fig. 1 ist ein Kraftfahrzeug 1 in Form eines Cabriolets dargestellt, das eine große Fahrgastzelle aufweist. Kraftfahrzeug 1 weist eine Windschutzscheibe 2, ein versenkbares Hardtop 3 als Verdeck des Cabriolets und einen Verdeckkasten 4 auf, in dem das versenkbare Hardtop in versenkter Stellung aufgenommen wird. Das Cabriolet ist im vorliegenden Fall als sehr geräumiger Zweisitzer ausgebildet, wobei das erfindungsgemäße Hardtop insbesondere auch für viersitzige Cabriolets und Limousinen geeignet ist.

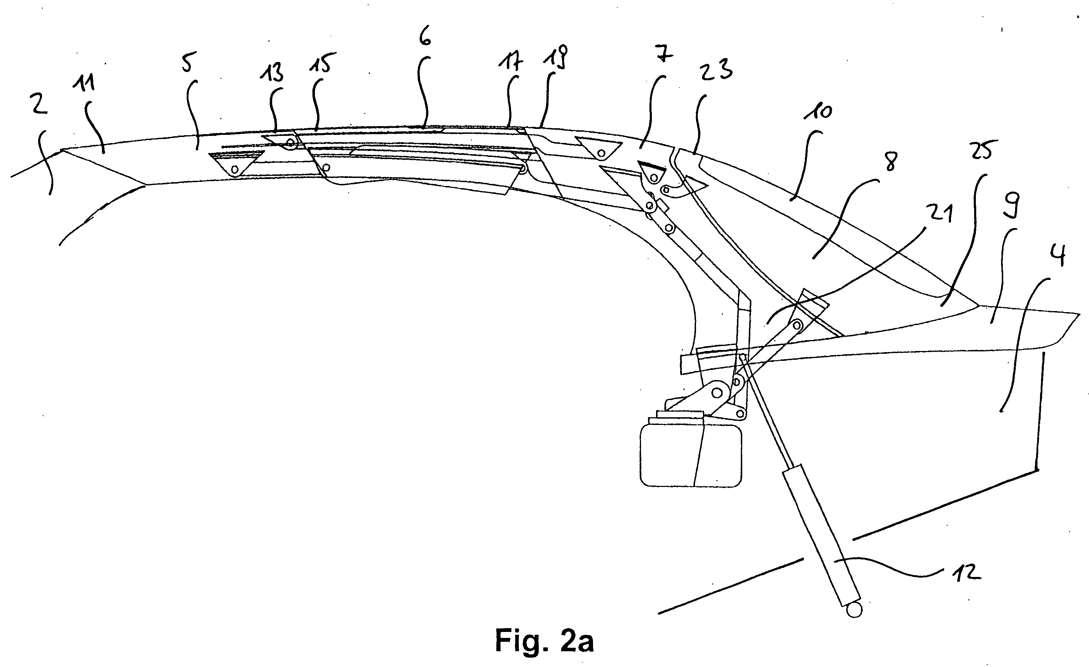

Wie am besten aus der Detaildarstellung in Fig. 2a ersichtlich, in der das Hardtop in geschlossener Stellung gezeigt ist, weist das Hardtop 3 insgesamt vier starre Dachabschnitte bzw. Schalen auf. Der erste, vordere Abschnitt 5 und der sich daran anschließende zweite Abschnitt 6 bilden hierbei im wesentlichen den Dachhimmel des Fahrzeuginnenraums. Der sich nach hinten dem zweiten Abschnitt 6 anschließende dritte Abschnitt 7 fungiert als C-Säule des Fahrzeugs, während der vierte, hintere Abschnitt 8 die Fahrgastzelle nach hinten abschließt. Im vorliegenden Beispielsfalle ist im hinteren Abschnitt 8 eine Heckscheibe 10 integriert. Der Verdeckkasten 4 wird von einem an sich bekannten Deckel 9 von oben abgeschlossen. Am oberen Rand der Windschutzscheibe 2 ist eine Halteeinrichtung (nicht dargestellt) vorgesehen, die zur Aufnahme einer Verschlußeinrichtung (nicht dargestellt) des Hardtops 3 dient. Jeder der Hardtopabschnitte weist einen vorderen, ersten Randbereich 11, 15, 19 bzw. 23 und einen hinteren, zweiten Randbereich 13, 17, 21 bzw. 25 auf.

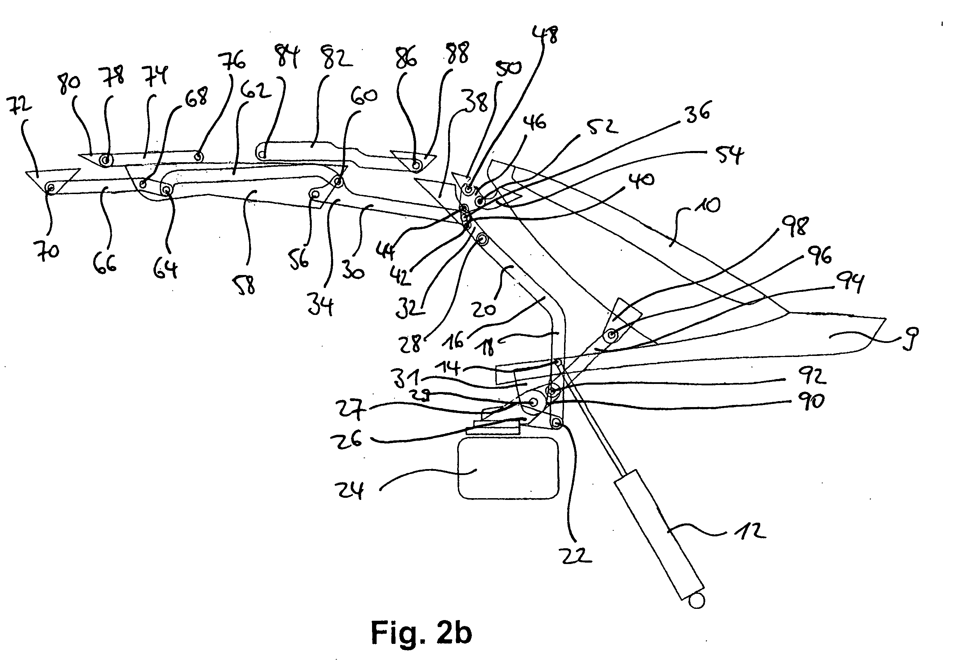

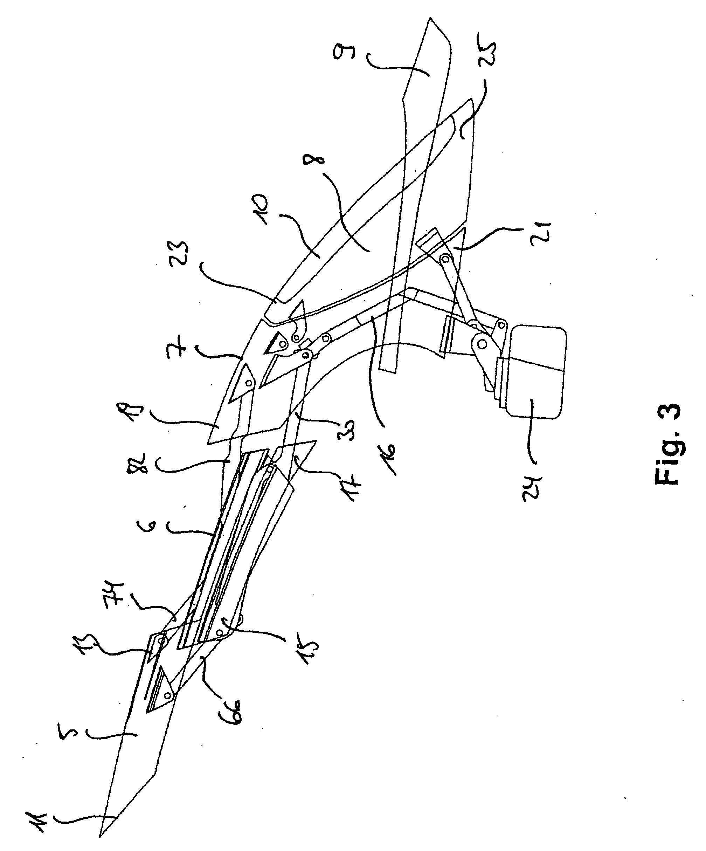

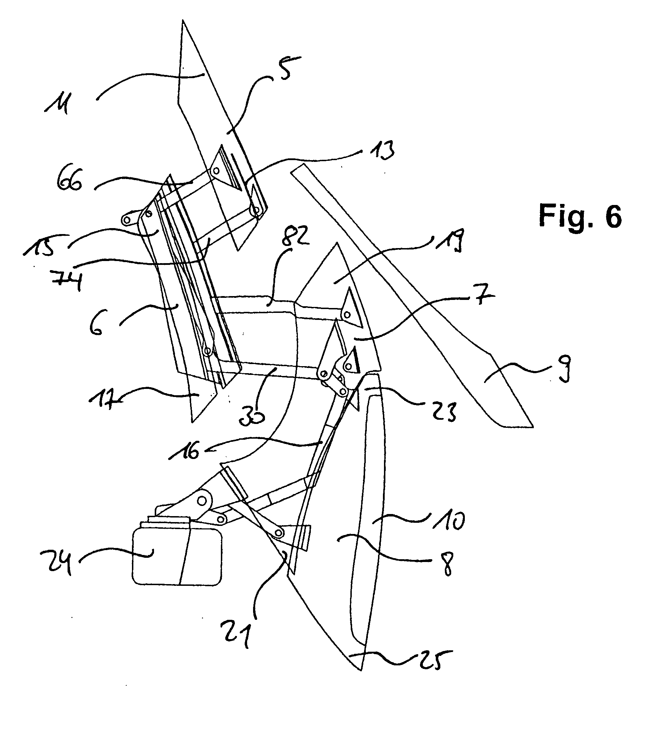

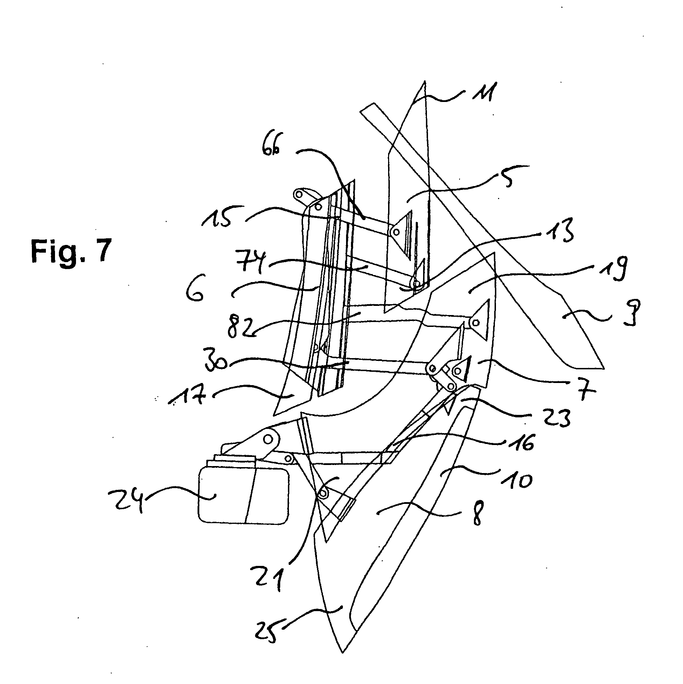

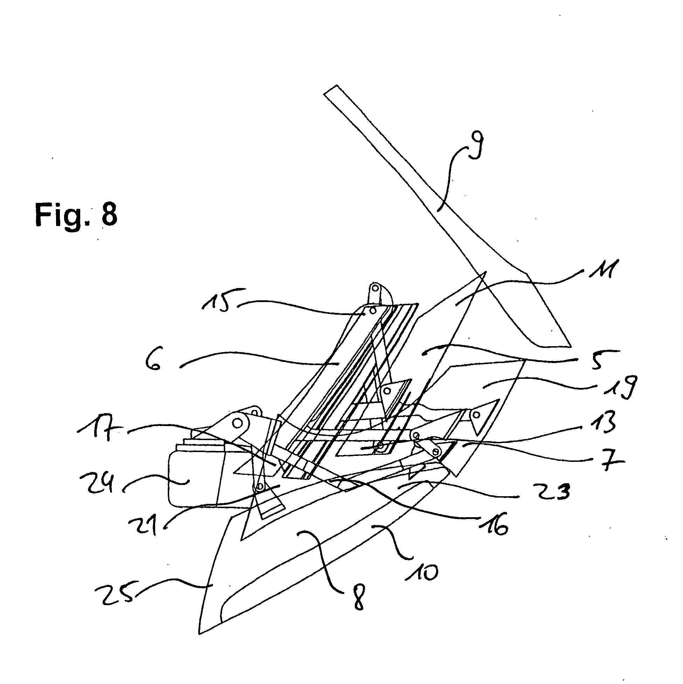

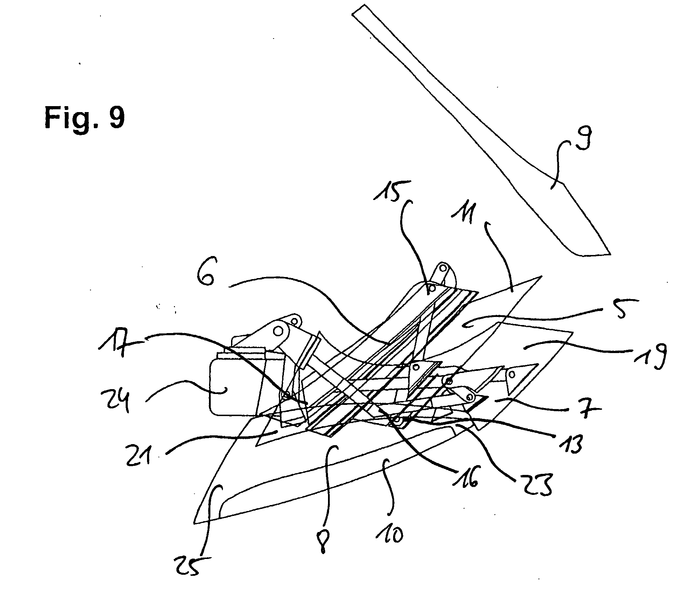

Der Aufbau und die Anordnung der Gelenkstreben einer bevorzugten Ausführungsform des erfindungsgemäßen Hardtops ist am besten aus Fig. 2b ersichtlich, in der aus Gründen der Übersichtlichkeit lediglich die ersten drei Dachabschnitte 5, 6 und 7 nicht mehr dargestellt sind, ansonsten aber alle mechanischen Komponenten detailliert mit Bezugsziffern versehen sind. In den Figuren 3 bis 10 sind aus Gründen der Übersichtlichkeit dann lediglich noch einige der mechanischen Hauptkomponenten mit Bezugsziffern versehen.

Im Bereich des Verdeckkastens 4 ist ein hydraulischer Zylinder 12 angeordnet, der die gesamte Bewegung des erfindungsgemäßen Hardtops 3 antreibt. Der hydraulische Zylinder 12 ist in Anlenkpunkt 14 drehbar mit dem Hauptbügel 16 des dritten Dachabschnitts 7 verbunden und zieht diesen beim öffnungsvorgang des Hardtops nach schräg hinten unten. Der Hauptbügel 16 weist eine Winkelform mit zwei Schenkeln auf, wobei der untere Schenkel 18, in dessen mittlerem Bereich der Anlenkpunkt 14 angeordnet ist, in geschlossener Stellung des Hardtops im wesentlichen senkrecht orientiert ist, und der etwas längere obere Schenkel 20 nach schräg vorne oben abgewinkelt ist. Der Hauptbügel 16 ist am unteren Ende seines unteren Schenkels 18 in Anlenkpunkt 22 drehbar mit dem hinteren Ende einer am Lagerbock 24 fest fixierten, steifen Lagerstrebe 26 verbunden, die sich in annähernd horizontaler Richtung erstreckt.

Vom Lagerbock 24 ragt eine weitere, fest daran fixierte Lagerstrebe 27 nach schräg hinten oben ab. An deren oberem Ende ist sie in Anlenkpunkt 29 mit Verbindungsglied 31 drehbar verbunden, welches fest mit dem unteren Bereich des dritten Dachabschnitts 7 verbunden ist.

Am oberen Ende des oberen Schenkels 20 von Hauptbügel 16 ist dieser gelenkig in Anlenkpunkt 28 mit der winkeligen, im wesentlichen nach vorne orientierten Gelenkstrebe 30 verbunden. Die Gelenkstrebe 30 weist einen zunächst parallel zum oberen Schenkel 20 des Hauptbügels 16 orientierten kurzen unteren Schenkel 32 und einen zunächst im wesentlichen horizontal, ausgerichteten langen oberen Schenkel 34 auf. Im winkeligen Übergangsbereich zwischen den beiden Schenkeln 32 und 34 ist in Anlenkpunkt 36 eine zunächst parallel zum unteren Schenkel 32 angeordnete, kurze Verbindungsstrebe 38 angebracht, die an ihrem oberen Ende fest mit dem dritten Dachabschnitt 7 verbunden ist.

In der Nähe von Anlenkpunkt 36 ist an der Gelenkstrebe 30 ein weiteres kurzes Verbindungsglied 40 drehbar im Anlenkpunkt 42 befestigt. An seinem oberen Ende ist es im Anlenkpunkt 44 mit einer dreieckigen Verbindungsplatte 46 gelenkig verbunden, die in ihren beiden anderen Ecken zwei weitere Anlenkpunkte aufweist. Der vordere Anlenkpunkt 48 stellt eine bewegliche Verbindung mit der kurzen Verbindungsstange 50 her, die an ihrem oberen Ende fest mit dem dritten Dachabschnitt 7 verbunden ist. Der hintere Anlenkpunkt 52 stellt eine gelenkige Verbindung zur Verbindungsstange 54 her, die an ihrem hinteren Ende fest mit dem vierten Dachabschnitt 8 verbunden ist.

Am vorderen Ende ist der obere Schenkel 34 der Gelenkstrebe 30 in Anlenkpunkt 56 beweglich mit einem schalenförmigen Einsatz 58 verbunden, der im zweiten Dachabschnitt 6 etwa durch Verklebung befestigt ist. In einer nicht weit von Anlenkpunkt 56 entfernten Ausbuchtung des oberen Schenkels 34 ist dieser in Anlenkpunkt 60 drehbar mit einem weiteren Bügel 62 verbunden. Dieser Bügel 62 ist annähernd U-förmig ausgebildet, wobei die beiden Schenkel sehr kurz und nach unten abragend ausgebildet sind, und sich der mittlere Abschnitt dazwischen im wesentlichen horizontal erstreckt. Ebenso wie auf der gegenüberliegenden Seite (Anlenkpunkt 60) ist auch am vorderen Schenkel ein Anlenkpunkt 64 vorgesehen, der eine gelenkige Verbindung zum Frontbügel 66 herstellt. Der Frontbügel 66 ist in Form und Anordnung der winkeligen Gelenkstrebe 30 sehr ähnlich, ist allerdings im winkeligen Übergangsbereich zwischen seinen beiden Schenkeln in Anlenkpunkt 68 drehbar mit dem schalenförmigen Einsatz 58 verbunden. Am vorderen Ende des Frontbügels 66 besteht über Anlenkpunkt 70 eine bewegliche Verbindung zum Verbindungsglied 72, das fest mit dem ersten Hardtopabschnitt 5 verbunden ist. Es ist auch denkbar, auf den schalenförmigen Einsatz zu verzichten und die Verbindungspunkte direkt mit dem zweiten Dachabschnitt herzustellen.

Alle bislang beschriebenen Elemente sind an beiden Fahrzeugslängsseiten symmetrisch angeordnet, in den Seitenansichten jedoch nur einmal zu sehen.

Beim erfindungsgemäßen Hardtopsystem existiert eine weitere Verbindung zwischen den drei vorderen Hardtopabschnitten, welche mehr in der Fahrzeugmitte, d.h. zwischen den Köpfen von Fahrer und Beifahrer, angeordnet ist. Eine erste Verbindungsstrebe 74 ist in Anlenkpunkt 76 beweglich mit dem zweiten Hardtopabschnitt 6 verbunden und verläuft von dort aus im wesentlichen parallel zu diesem geradlinig nach vorne, wo sie in einem weiteren Anlenkpunkt 78 mit dem Verbindungsglied 80 beweglich verbunden ist, welches wiederum fest mit dem ersten Hardtopabschnitt 5 in Verbindung steht.

Die Verbindung zwischen zweitem und drittem Dachabschnitt wird durch die Verbindungsstrebe 82 hergestellt, welche ebenfalls annähernd horizontal verläuft und an ihrem vorderen Ende in Anlenkpunkt 84 beweglich mit dem zweiten Hardtopabschnitt 6 in Verbindung steht. An ihrem hinteren Ende ist die Verbindungsstrebe 82 in Anlenkpunkt 86 beweglich mit dem Verbindungsglied 88 verbunden, das wiederum fest mit dem dritten Hardtopabschnitt 7 verbunden ist.

Wie schon erwähnt, sind die beiden Verbindungsstreben 74 und 82 mehr in der Fahrzeugmitte angeordnet, allerdings aus Symmetrie- und Konstruktionsgründen ebenfalls doppelt in symmetrischem Abstand von der Fahrzeugmitte vorhanden. Wie es sich naturgemäß aus der leicht gewölbten Form der Hardtopabschnitte ergibt, sind die beiden Streben 74 und 82 deutlich höher als die übrigen, an den Fahrzeuglängsseiten verlaufenden Streben angeordnet, was einige Vorteile für den Verdeckmechanismus mit sich bringt. Somit kann aufgrund des Höhenunterschieds ein größerer Hebeleffekt erzielt werden, ohne - wie bislang bei einer Plazierung der Streben ebenfalls an den Fahrzeuglängsseiten nötig gewesen wäre-die Kopffreiheit der Insassen des Fahrzeugs zu beschränken. Des weiteren unterstützen die Mittelstreben 74 und 82 die Hardtopabschnitte bei hoher Schneebelastung im Winter und sorgen für noch stärkere Stabilität und Robustheit der Verdeckkonstruktion sowie für eine bessere Führung bei den Verschwenkvorgängen.

Schließlich ist der vierte Hardtopabschnitt 8 in Richtung seines unteren Randbereichs mit einer fest mit dem Lagerbock 24 verbundenen Lagerstrebe 90 verbunden. Am oberen Ende der schräg nach hinten oben orientierten Lagerstrebe 90 ist sie in Anlenkpunkt 92 mit einer geraden Verbindungsstrebe 94 drehbar verbunden, die an ihrem anderen Ende wiederum in Anlenkpunkt 96 beweglich mit dem Verbindungsglied 98 in Verbindung steht, welches fest mit dem vierten Hardtopabschnitt 8 verbunden ist. Dieser Mechanismus ist wiederum an den beiden Fahrzeuglängsseiten angeordnet und dient dem automatischen Einziehen des vierten Hardtopabschnitts 8 in das Innere des dritten Abschnitts 7 während des Versenkvorgangs des Hardtops.

Die Betriebsweise des versenkbaren Hardtops 3 wird nunmehr insbesondere unter Bezugnahme auf die Figuren 3 bis 10 beschrieben.

In Fig. 3 ist eine leicht geöffnete Stellung des erfindungsgemäßen Hardtops 3 dargestellt. Zusätzlich zu der durch das Heranziehen des hydraulischen Zylinders und die oben detailliert beschriebene konstruktive mechanische Ausgestaltung der Gelenkstreben hervorgerufene Anhebung des ersten Hardtopabschnitts 5 kann dieser zusätzlich durch bereits bekannte Unterstützungsmechanismen im Rahmen der Verschlußvorrichtung bzw. der Halteeinrichtung etwa durch Motorkraft bei seinem Schwenkvorgang nach oben unterstützt werden.

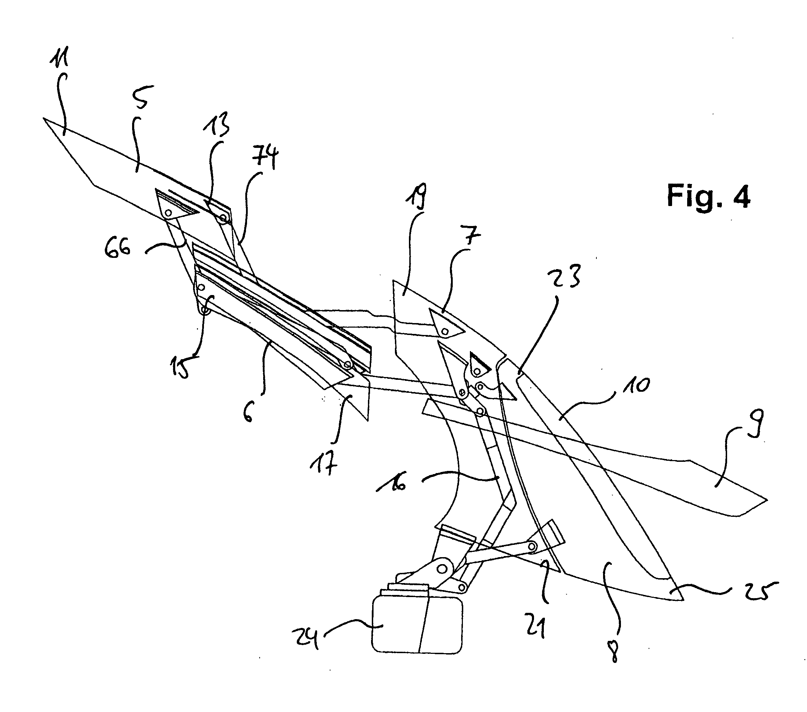

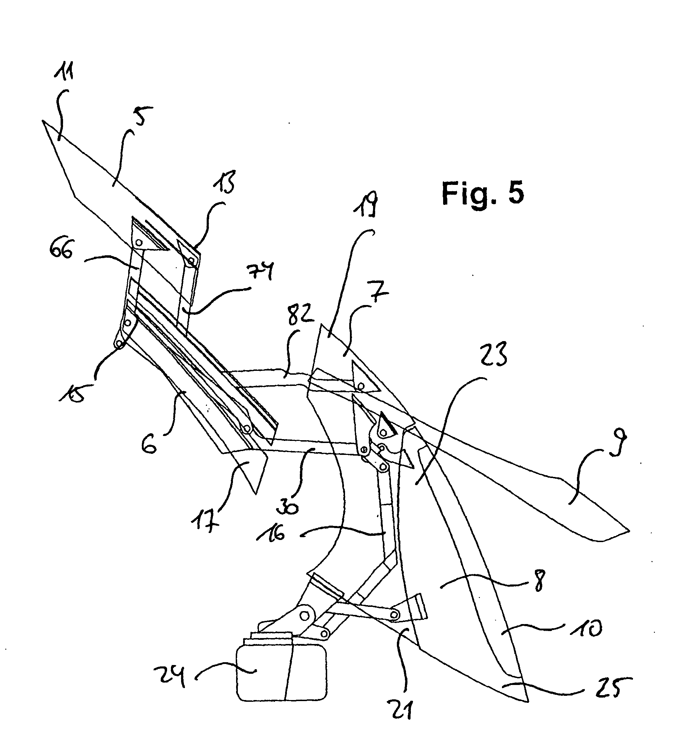

in Fig. 4 und 5 ist deutlich ersichtlich, daß der Deckel 9 des Verdeckkastens 4 sich ausreichend weit mit seinem vorderen Randbereich nach oben bewegt hat, um den Absenkvorgang des Hardtops 3 in den Verdeckkasten 4 nicht zu behindern. Wie aus den Fig. 4 bis 10 hervorgeht, werden die beiden vorderen Hardtopabschnitte 5 und 6 nunmehr simultan zu den Hardtopabschnitten 7 und 8 nach hinten unten abgesenkt, wobei sich der vordere Abschnitt 5 zunächst über den sich absenkenden zweiten Abschnitt 6 bewegt und anschließend zwischen diesen und den dritten Abschnitt hineinbewegt. Diese korrelierte Bewegung wird allein durch Betätigung des hydraulischen Zylinders hervorgerufen, die dann bei der vorliegenden mechanischen Konstruktion insbesondere über eine Wechselwirkung von Hauptbügel 16, Gelenkstrebe 30, Bügel 62 und Frontbügel 66 sowie über die beiden Mittelstreben 74 und 82 die Bewegung der einzelnen Dachabschnitte zur Folge hat.

Im Laufe der Bewegung wird zusätzlich der vierte Hardtopabschnitt 8 über die Verbindungsstange 92 in das Innere des dritten Hardtopabschnitts 7 eingezogen, was zu einer weiteren deutlichen Platzersparnis führt.

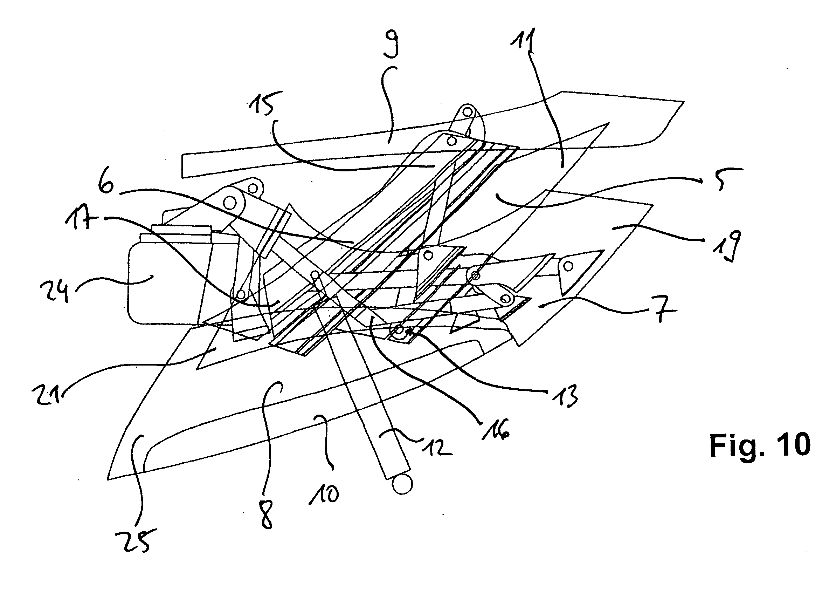

Wie am besten aus Fig. 10 ersichtlich, befinden sich die vier Hardtopabschnitte in der eingeklappten Endstellung in einer ineinandergeschachtelten Stellung, wobei sich jeweils der erste Randbereich 11, 15, 19 bzw. 23 nunmehr, in Fahrzeuglängsrichtung betrachtet, hinter dem zweiten Randbereich 13, 17, 21 bzw. 25 befindet. Im Prinzip ähnelt die Bewegung der einzelnen Hardtopabschnitte somit einer Drehung um diverse horizontal in Fahrzeugquerrichtung verlaufende, bewegte Drehachsen im Bereich des Lagerbocks, um welche sich die einzelnen Abschnitte nach hinten unten in den Verdeckkasten hineinbewegen, wobei sie mehr oder weniger umgedreht werden.

Aus den Fig. 3 bis 10 ist ebenso ersichtlich, daß die Mittelstreben 74 und 82 sowie die seitlichen Frontbügel 66 und die Gelenkstreben 30 bei der Einklappbewegung des Hardtops 3 insbesondere durch den zweiten Hardtopabschnitt 6 hindurch müssen, um die dargestellte Mechanik überhaupt anwendbar und funktionsfähig zu machen.

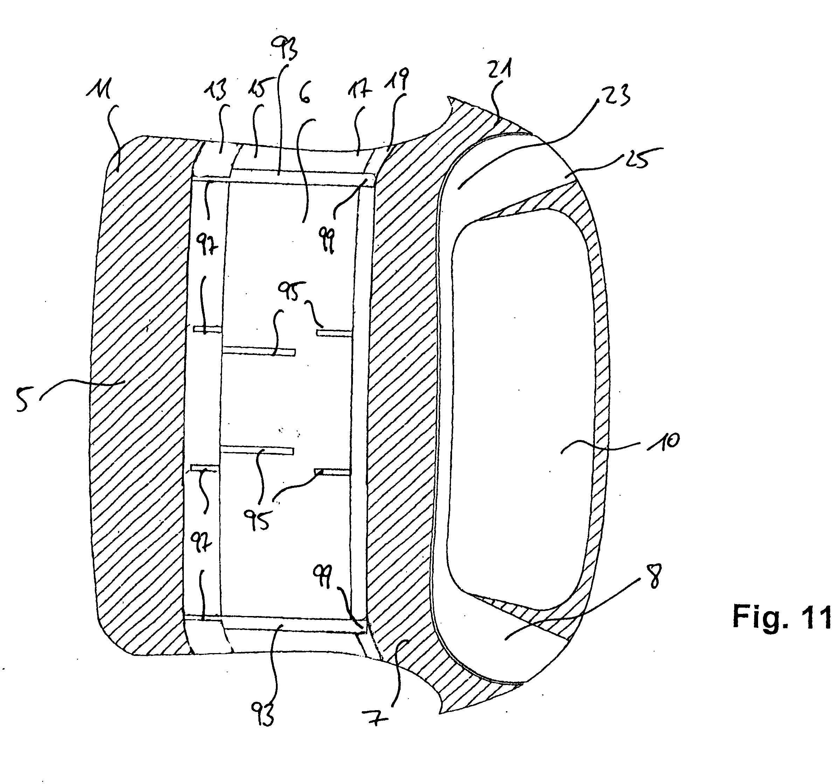

Wie der Draufsicht auf das erfindungsgemäße Hardtopsystem gemäß Fig. 11 zu entnehmen ist, sind daher Längsschlitze im zweiten Dachabschnitt 6 angeordnet, die zum Durchtritt der entsprechenden Streben dienen. Im Außenbereich sind dies durchgängige Längsschlitze 93 zum Durchtritt der Frontbügel 66 und der Gelenkstreben 30, während im Bereich der Dachmitte weitere Längsschlitze 95 zum Durchtritt der Verbindungsstreben 74 und 82 vorgesehen sind. Im Sinne eines reibungslosen Ablaufs und einer Optimierung der Mechanik sowie einer Erzielung eines minimalen Platzbedarfs in der geöffneten Stellung des Hardtops sind zudem im hinteren Randbereich 13 des ersten Hardtopabschnitts 5 sowohl in den Außenbereichen als auch im Bereich der Dachmitte weitere Längsschlitze 97 angeordnet, und ebenfalls im vorderen Randbereich 19 des dritten Hardtopabschnitts 7.

Um die in den Dachabschnitten entstandenen Schlitze zu überdecken, wird eine bisher nicht gezeigte Folie flächig auf große Bereiche des ersten, dritten und vierten Dachabschnitts aufgeklebt. Ein Beispiel für die Flächen, auf denen die Folie aufgeklebt wird, ist in Fig. 11 durch die schraffierten Bereiche dargestellt.

Somit wird durch das erfindungsgemäße Hardtopsystem eine Konstruktion geschaffen, die auch bei Fahrzeugen mit großem Fahrzeuginnenraum einsetzbar, gleichzeitig stabil, robust und zuverlässig ist und auch im eingeklappten Zustand relativ wenig Platz benötigt.

## Patentansprüche

1. Versenkbares Hardtop (3) für Personenkraftwagen, insbesondere für 4-sitzige Cabriolets, mit
einem ersten, vorderen Abschnitt (5), der in Verbindung mit dem oberen Randbereich der Windschutzscheibe (2) bringbar ist, mit einem in geschlossener Stellung des Hardtops (3) an den ersten Abschnitt (5) anschließenden zweiten Abschnitt (6), einem an den zweiten Abschnitt (6) anschließenden dritten Abschnitt (7) und einem an den dritten Abschnitt (7) anschließenden vierten, hinteren Abschnitt (8), wobei jeder Abschnitt jeweils einen vorderen, ersten Randbereich (11, 15, 19, 23) und einen hinteren, zweiten Randbereich (13, 17, 21, 25) aufweist,
wobei der erste (5) und der zweite (6) Abschnitt in geschlossener Stellung des Hardtops (3) im wesentlichen den Dachhimmel bilden, der dritte Abschnitt (7) im wesentlichen die C-Säule bildet und der vierte Abschnitt (8) den oberen Bereich der Fahrgastzelle nach hinten abschließt,
wobei die Abschnitte in einen Verdeckkasten (4) im Kraftfahrzeug hinein und aus ihm heraus schwenkbar angeordnet sind,
wobei jeder der Abschnitte derart angelenkt ist, daß er beim öffnungsvorgang nach hinten unten schwenkbar ist, so daß in geöffneter Stellung des Hardtops alle vier Abschnitte ineinandergeschachtelt mit ihrem jeweiligen ersten Randbereich (11, 15, 19, 23) in Fahrzeuglängsrichtung hinter dem zweiten Randbereich (13, 17, 21, 25) zu liegen kommen, und
wobei das Hardtop eine flexible Außenschicht, insbesondere aus textilem Gewebe, aufweist, die mit dem ersten (5) und dem dritten (7) Abschnitt flächig verbunden ist.
**dadurch gekennzeichnet, dass**
die flexible Außenschicht auch mit Bereichen des vierten Abschnitts (8) flächig verbunden ist.

2. Hardtop nach Anspruch 1, **dadurch gekennzeichnet, daß** der erste (5), zweite (6) und dritte (7) Abschnitt über mehrere jeweils symmetrisch an beiden Außenbereichen des Hardtops angeordnete und schwenkbar verbundene Gelenkstreben (16, 30, 62, 66) verbunden sind.

3. Hardtop nach Anspruch 1 oder 2, **dadurch gekennzeichnet, daß** der erste (5), zweite (6) und dritte (7) Abschnitt über im Bereich der Dachmitte zwischen den Außenbereichen des Hardtops angeordnete und schwenkbar verbundene Gelenkstreben (74, 82) verbunden sind.

4. Hardtop nach Anspruch 3, **dadurch gekennzeichnet, daß** im zweiten Abschnitt (6) in den Außenbereichen sowie im Bereich der Dachmitte Längsschlitze (93, 95) angeordnet sind, die zum Durchtritt von Gelenkstreben (74, 82) während des Öffnungsvorgangs des Hardtops dienen.

5. Hardtop nach Anspruch 4, **dadurch gekennzeichnet, daß** im zweiten Randbereich (13) des ersten Abschnitts (5) in den Außenbereichen sowie im Bereich der Dachmitte Längsschlitze (97) angeordnet sind, die zum Durchtritt von Gelenkstreben (30, 66, 74, 82) während des Öffnungsvorgangs des Hardtops dienen.

6. Hardtop nach Anspruch 5, **dadurch gekennzeichnet, daß** im ersten Randbereich (19) des dritten Abschnitts (7) in den Außenbereichen Längsschlitze (99) angeordnet sind, die zum Durchtritt von Gelenkstreben (30, 66) während des öffnungsvorgangs des Hardtops dienen.

7. Hardtop nach einem der vorangehenden Ansprüche, **dadurch gekennzeichnet, daß** beim öffnungsvorgang des Hardtops der erste, vordere Abschnitt (5) zunächst über den zweiten Abschnitt (6) und anschließend zwischen diesen und den dritten Abschnitt (7) bewegbar ist.

8. Hardtop nach einem der vorangehenden Ansprüche, **dadurch gekennzeichnet, daß** der vierte Abschnitt (8) während des öffnungsvorgangs des Hardtops in den dritten Abschnitt (7) hineinbewegbar ist.

9. Hardtop nach einem der vorangehenden Ansprüche, **dadurch gekennzeichnet, daß** in den vierten Abschnitt (8) eine Heckscheibe (10) integriert ist.

## Claims

1. A retractable hard top (3) for passenger cars, in particular for four-seated convertibles, comprising
a first, front section (5) which is adapted to be connected to the upper edge portion of the windshield (2), a second section (6) adjoining the first section (5) when the hard top (3) is closed, a third section (7) adjoining the second section (6), and a fourth, rear section (8) adjoining the third section (7), wherein each section has a front, first edge portion (11, 15, 19, 23) and a rear, second edge portion (13, 17, 21, 25),
wherein the first (5) and the second (6) section substantially form the roof ceiling in the closed position of the hard top (3), the third section (7) substantially forms the C-pillar and the fourth section (8) closes the upper portion of the passenger compartment towards the back,
wherein the sections are arranged in a manner to be pivoted into and out of a top box (4) located in the motor vehicle, and
wherein each of the sections is coupled in a manner that it can be pivoted backwardly downwards during the opening process, so that in the open position of the hard top all four sections are nested within one another, with their respective first edge portion (11, 15, 19, 23) being positioned behind the second edge portion (13, 17, 21, 25) relating the longitudinal vehicle direction, and
wherein the hard top comprises a flexible outer layer, particularly made of a textile tissue, said layer being planarly connected to the first (5) and the third (7) section,
**characterized in that** said flexible outer layer is also planarly connected to portions of the fourth section (8).

2. A hard top as claimed in claim 1, **characterized in that** the first (5), second (6) and third (7) sections are connected via a plurality of hinge braces (16, 30, 62, 66) which are arranged symmetrically at the two outer portions of the hard top and are pivotally connected with one another.

3. A hard top as claimed in claim 1 or 2, **characterized in that** the first (5), second (6) and third (7) sections are connected via hinge braces (74, 82) which are arranged in the area of the roof center between the outer portions of the hard top and are pivotally connected with one another.

4. A hard top as claimed in claim 3, **characterized in that** longitudinal slots (93, 95) are arranged in the second section (6) in the outer portions and in the area of the roof center, said slots allowing hinge braces (74, 82) to pass during the opening process of the hard top.

5. A hard top as claimed in claim 4, **characterized in that** longitudinal slots (97) are arranged in the second edge portion (13) of the first section (5) in the outer portions and in the area of the roof center, said slots allowing hinge brackets (30, 66, 74, 82) to pass during the opening process of the hard top.

6. A hard top as claimed in claim 5, **characterized in that** longitudinal slots (99) are arranged in the first edge portion (19) of the third section (7) in the outer portions, said slots allowing hinge braces (30, 66) to pass during the opening process of the hard top.

7. A hard top as claimed in one of the preceding claims, **characterized in that** during the opening process of the hard top the first, front section (5) is first movable beyond the second section (6) and subsequently between this section and the third section (7).

8. A hard top as claimed in one of the preceding claims, **characterized in that** the fourth section (8) can be moved into the third section (9) during the opening process of the hard top.

9. A hard top as claimed in one of the preceding claims, **characterized in that** a rear window (10) is integrated into the fourth section (8).

## Revendications

1. Toit amovible escamotable (3) pour voitures particulières, en particulier pour cabriolets à quatre places, comprenant
une première section avant (5), qui peut être mise en liaison avec la zone marginale supérieure du pare-brise (2), une deuxième section (6) qui se raccorde à la première section (5) en position de fermeture du toit amovible (3), une troisième section (7) qui se raccorde à la deuxième section (6) et une quatrième section arrière (8) qui se raccorde à la troisième section (7), chaque section présentant une première zone marginale avant (11, 15, 19, 23) et une seconde zone marginale arrière (13, 17, 21, 25),
la première (5) et la deuxième section (6) formant essentiellement l'habillage de plafond en position de fermeture du toit amovible (3), la troisième section (7) formant essentiellement l'arceau, et la quatrième section (8) fermant vers l'arrière la zone supérieure de l'habitacle,
les sections étant disposées avec une possibilité de pivotement dans un coffre de masquage (4) dans le véhicule et hors de celui-ci,
chacune des sections étant articulée de sorte qu'elle peut pivoter vers l'arrière et vers le bas lors de l'opération d'ouverture, si bien que, en position d'ouverture du toit amovible, les quatre sections emboîtées les unes dans les autres viennent se situer par leurs premières zones marginales respectives (11, 15, 19, 23) derrière la seconde zone marginale (13, 17, 21, 25) dans la direction longitudinale du véhicule,
le toit amovible présentant une couche extérieure flexible, en particulier en tissu textile, qui est reliés à plat à la première (5) et à la troisième (7) sections,
**caractérisé en ce que** la couche extérieure flexible est également reliée à plat à des zones de la quatrième section (8).

2. Toit amovible suivant la revendication 1, **caractérisé en ce que** la première (5), la deuxième (6) et la troisième (7) sections sont reliées par l'intermédiaire de plusieurs jambes de force articulées (16, 30, 62, 66), respectivement disposées de façon symétrique sur les deux zones extérieures du toit amovible et reliées avec une possibilité de pivotement.

3. Toit amovible suivant l'une des revendications 1 et 2, **caractérisé en ce que** la première (5), la deuxième (6) et la troisième sections (7) sont reliées par l'intermédiaire de jambes de force articulées (74, 82) disposées dans la zone du milieu du toit entre les zones extérieures du toit amovible et reliées avec une possibilité de pivotement.

4. Toit amovible suivant la revendication 3, **caractérisé en ce que** des fentes longitudinales (93, 95), qui servent au passage de jambes de force articulées (74, 82) pendant l'opération d'ouverture du toit amovible, sont disposées dans la deuxième section (6) dans les zones extérieures ainsi que dans la zone du milieu du toit.

5. Toit amovible suivant la revendication 4, **caractérisé en ce que** des fentes longitudinales (97), qui servent au passage de jambes de force articulées (30, 66, 74, 82) pendant l'opération d'ouverture du toit amovible, sont disposées dans la seconde zone marginale (13) de la première section (5) dans les zones extérieures ainsi que dans la zone du milieu du toit.

6. Toit amovible suivant la revendication 5, **caractérisé en ce que** des fentes longitudinales (99), qui servent au passage de jambes de force articulées (30, 66) pendant l'opération d'ouverture du toit amovible, sont disposées dans la première zone marginale (19) de la troisième section (7) dans les zones extérieures.

7. Toit amovible suivant l'une des revendications précédentes, **caractérisé en ce que**, lors de l'opération d'ouverture du toit amovible, la première section avant (5) peut se déplacer d'abord sur la deuxième section (6), puis entre cette dernière et la troisième section (7).

8. Toit amovible suivant l'une des revendications précédentes, **caractérisé en ce que** la quatrième section (8) peut être déplacée dans la troisième section (7) pendant l'opération d'ouverture du toit amovible.

9. Toit amovible suivant l'une des revendications précédentes, **caractérisé en ce qu'**une lunette arrière (10) est intégrée à la quatrième section (8).
